# EUROPEAN PATENT APPLICATION

(11) **EP 4 223 670 A1**
(43) Date of publication of application: **09.08.2023**
(21) Application number: 22737695.1
(22) Date of filing: 04.03.2022
(51) Int. Cl.: B65G 15/30

(54) **SMALL-TURNING, HIGH-STRENGTH, AND HIGH-ELONGATION CONVEYING BELT**

(30) Priority: 21.12.2021 CN 202111575084
(71) Applicant: Zhejiang Double Arrow Rubber Co., Ltd, Tongxiang, Zhejiang 314513 (CN)
(72) Inventor: SHEN, Huimin, Tongxiang, Zhejiang 314513 (CN); ZHUANG, Bingjian, Tongxiang, Zhejiang 314513 (CN); YE, Yangzheng, Tongxiang, Zhejiang 314513 (CN)
(74) Representative: Bayramoglu et al.
(86) International application number: PCT/CN2022/079161
(87) International publication number: WO 2023/115705

(57) **Abstract**

The present invention relates to the technical field of conveyor belts, and specifically discloses a conveyor belt of high strength and high extensibility for sharp turns, comprising: a base belt and a plurality of belt cores arranged inside the base belt along a longitudinal direction of the base belt. The base belt has a cross section of an isosceles trapezoid, and a width of a bottom of the base belt is 95% of a width of a top of the base belt. A plurality of V-shaped stripes are arranged on the top of the base belt. A plurality of transverse stripes are arranged on the bottom of the base belt. The present invention features the technical effects of high extensibility and high strength for small turning radius.

## Description

### TECHNICAL FIELD

The present invention relates to the technical field of conveyor belts, and specifically to a conveyor belt of high strength and high extensibility for sharp turns.

### BACKGROUND

Conveyor belts are composite products of rubber, fiber and metal or composite products of plastic and fabric for bearing and conveying materials. They are widely applied to occasions with short conveying distance and small conveying amount in industries of cement, coking, metallurgy, chemical engineering, steel and the like. However, in the prior art, the large turning radius of conveyor belts lead to low holding force to the roller and disadvantages in conveying operation. Also, conventional conveyor belts have relatively poor strength and low extensibility, and thus have reduced bearing and conveying capacity.

Therefore, it is one of the technical problems to be solved in the art how to provide a conveyor belt of high strength and high extensibility for sharp turns of small turning radius.

### SUMMARY

In view of this, the present invention provides a conveyor belt of high strength and high extensibility for sharp turns. The purpose is to solve the above mentioned defects.

In order to solve the above technical problem, the present invention adopts the following technical schemes:
Disclosed is a conveyor belt of high strength and high extensibility for sharp turns, comprising: a base belt and a plurality of belt cores arranged inside the base belt along a longitudinal direction of the base belt. The base belt has a cross section of an isosceles trapezoid, and a width of a bottom of the base belt is 95% of a width of a top of the base belt. A plurality of V-shaped stripes are arranged on the top of the base belt. A plurality of transverse stripes are arranged on the bottom of the base belt.

Preferably, the plurality of belt cores are arranged in parallel with each other and arranged in an upper layer and a lower layer inside the base belt; the number of the belt cores in the layer close to the top of the base belt is greater than that of the belt cores in the layer away from the top of the base belt.

The technical scheme has the beneficial effect that bending of the top of the base belt towards the bottom of the base belt is facilitated.

Preferably, each of the belt cores comprises: a thickened high-elasticity rubber band and a plurality of hemp ropes; the hemp ropes are wrapped on the thickened high-elasticity rubber band along an axis of the thickened high-elasticity rubber band.

The technical scheme has the beneficial effects that: the thickened high-elasticity rubber band provides a contraction space for the plurality of hemp ropes, and is favorable for improving the extensibility of the whole conveyor belt.

Compared with the prior art, the present invention achieves the following technical effects:
1. The bending of the top of the base belt towards the bottom of the base belt is facilitated by the greater number of belt cores in the layer close to the top of the base belt than that of belt cores in the layer away from the top of the base belt;
2. By wrapping the plurality of hemp ropes on the thickened high-elasticity rubber band along the axis of the thickened high-elasticity rubber band, a contraction space is provided for the plurality of hemp ropes, which consequently is favorable for improving the extensibility of the whole conveyor belt. Also, the plurality of hemp ropes feature high connection strength, thus improving the strength of the whole conveyor belt.

### BRIEF DESCRIPTION OF THE DRAWINGS

FIG. 1 is a structural schematic of the conveyor belt of high strength and high extensibility for sharp turns according to the present invention;
FIG. 2 is a cross-sectional schematic along the line A-A of the conveyor belt of high strength and high extensibility for sharp turns according to the present invention;
FIG. 3 is an enlarged schematic at position B of the conveyor belt of high strength and high extensibility for sharp turns according to the present invention;
FIG. 4 is a structural schematic of the bottom of the conveyor belt of high strength and high extensibility for sharp turns according to the present invention;
FIG. 5 is an enlarged schematic at position C of the conveyor belt of high strength and high extensibility for sharp turns according to the present invention;

In the drawings: 1-base belt; 11-V-shaped stripe; 12-transverse stripe; 2-belt core; 21-thickened high-elasticity rubber band; 22-hemp rope.

### DETAILED DESCRIPTION

The technical schemes in the embodiments of the present invention will be clearly and completely described below with reference to the drawings in the embodiments of the present invention, and it is obvious that the described embodiments are only a part of the embodiments of the present invention but not all of them. Based on the embodiments of the present invention, all other embodiments obtained by those skilled in the art without creative effort shall fall within the protection scope of the present invention.

### Example 1

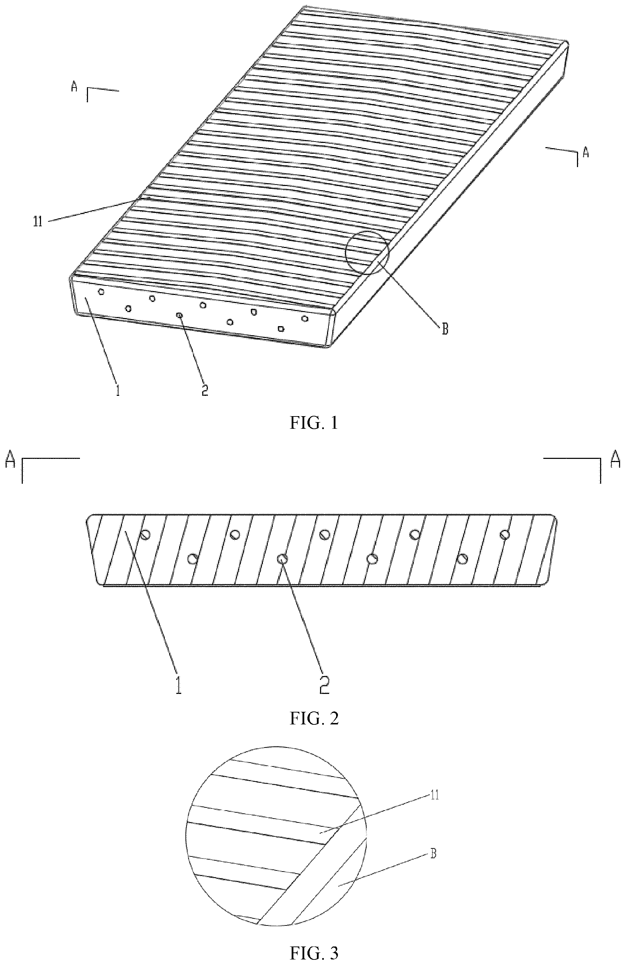

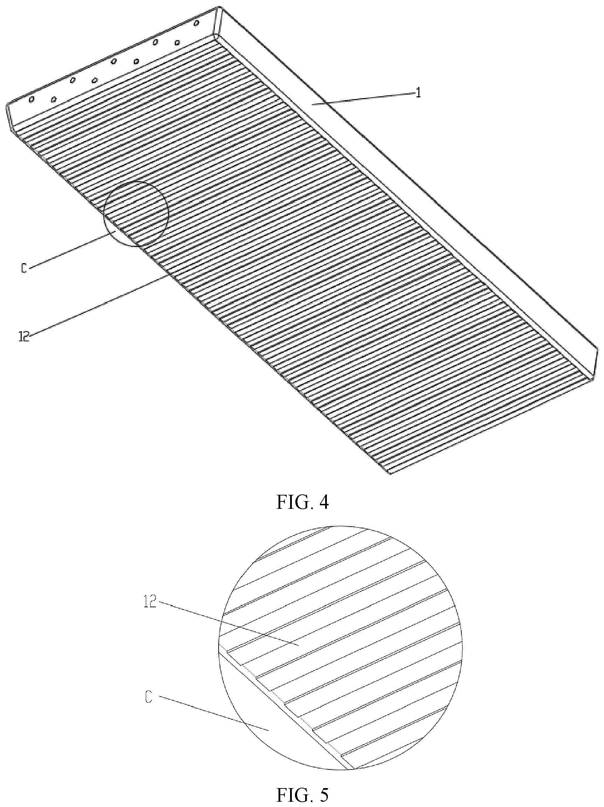

Referring to FIGs. 1-5, provided is a conveyor belt of high strength and high extensibility for sharp turns comprising a base belt 1 and a plurality of belt cores 2. The plurality of belt cores 2 are arranged in parallel with each other and arranged in an upper layer and a lower layer inside the base belt 1 along a longitudinal direction of the base belt 1, thus improving the strength of the whole conveyor belt.

The number of the belt cores 2 in the layer close to the top of the base belt 1 is greater than that of the belt cores 2 in the layer away from the top of the base belt 1, which facilitates the bending of the top of the base belt 1 towards the bottom. The base belt 1 has a cross section of an isosceles trapezoid, and the width of the bottom of the base belt 1 is 95% of the width of the top of the base belt 1, which further facilitates the bending to base belt 1 towards the bottom.

Each of the belt cores 2 comprises a thickened high-elasticity rubber band 21 and a plurality of hemp ropes 22. The hemp ropes 22 are wrapped on the thickened high-elasticity rubber band 21 along the axis of the thickened high-elasticity rubber band 21. The thickened high-elasticity rubber band 21 provides a contraction space for the plurality of hemp ropes 22, thus improving the extensibility of the whole conveyor belt.

A plurality of V-shaped stripes 11 are arranged on the top of the base belt 1 and a plurality of transverse stripes 12 are arranged on the bottom of the base belt 1. The distance between every two adjacent V-shaped stripes 11 is 1/3 of the thickness of the conveyor belt, the distance between every two adjacent transverse stripes 12 is 1/5 of the thickness of the conveyor belt, and the thickness of each transverse stripe 12 is 1/100 of the thickness of the conveyor belt. By defining the technical parameters of the V-shaped stripes 11 and the transverse stripes 12, the turning amplitude of the whole conveyor belt is favorably controlled.

### Rationale:

When the conveyor belt operates, the integral strength is improved by the plurality of belt cores 2 inside; by wrapping the plurality of hemp ropes 22 on the thickened high-elasticity rubber band 21, a contraction space is provided for the plurality of hemp ropes 22 by the thickened high-elasticity rubber band 21, thus providing the conveyor belt with an excellent extensibility during the operation; by matching and defining the technical parameters of the plurality of V-shaped stripes 11 and the plurality of transverse stripes 12, the requirement for the bending amplitude of the whole conveyor belt on the roller is met.

The above description is only preferred embodiments of the present invention, and is not intended to limit the technical scope of the present invention. As such, any minor amendments, equivalent changes and modifications made to the above embodiments according to the technical spirit of the present invention shall fall within the scope of the technical scheme of the present invention.

## Claims

1. A conveyor belt of high strength and high extensibility for sharp turns, comprising: a base belt (1) and a plurality of belt cores (2) arranged inside the base belt (1) along a longitudinal direction of the base belt (1); wherein
the base belt (1) has a cross section of an isosceles trapezoid, and a width of a bottom of the base belt (1) is 95% of a width of a top of the base belt (1);
a plurality of V-shaped stripes (11) are arranged on the top of the base belt (1); a plurality of transverse stripes (12) are arranged on the bottom of the base belt (1).

2. The conveyor belt of high strength and high extensibility for sharp turns according to claim 1, wherein the plurality of belt cores (2) are arranged in parallel with each other and arranged in an upper layer and a lower layer inside the base belt (1); the number of the belt cores (2) in the layer close to the top of the base belt (1) is greater than that of the belt cores (2) in the layer away from the top of the base belt (1).

3. The conveyor belt of high strength and high extensibility for sharp turns according to claim 1, wherein each of the belt cores (2) comprises: a thickened high-elasticity rubber band (21) and a plurality of hemp ropes (22); the hemp ropes (22) are wrapped on the thickened high-elasticity rubber band (21) along an axis of the thickened high-elasticity rubber band (21).
